# EUROPÄISCHE PATENTSCHRIFT

(11) **EP 1 112 312 B1**
(45) Veröffentlichungstag und Bekanntmachung des Hinweises auf die Patenterteilung: **05.11.2003**
(21) Anmeldenummer: 99944565.3
(22) Anmeldetag: 01.09.1999
(51) Int. Cl.: C08K 5/3445, C08L 101/00

(54) **POLYMERE ZUSAMMENSETZUNG MIT VERBESSERTEN GLANZEIGENSCHAFTEN**
POLYMER COMPOUND WITH IMPROVED GLOSS PROPERTIES
COMPOSITION DE POLYMERES AUX PROPRIETES DE BRILLANCE AMELIOREES

(30) Priorität: 11.09.1998 EP 98810909
(43) Veröffentlichungstag der Anmeldung: 04.07.2001
(73) Patentinhaber: Ciba Specialty Chemicals Holding Inc., 4057 Basel (CH)
(72) Erfinder: PFAENDNER, Rudolf, D-64668 Rimbach (DE); MALZACHER, Kornelia, D-64678 Lindenfels (DE)
(86) Internationale Anmeldenummer: EP9906395
(87) Internationale Veröffentlichungsnummer: WO00015708

(56) Entgegenhaltungen:
- DE-A- 1 906 515
- GB-A- 942 619
- GB-A- 1 049 100
- GB-A- 1 136 594
- PATENT ABSTRACTS OF JAPAN vol. 018, no. 114 (C-1171), 24. Februar 1994 (1994-02-24) & JP 05 306352 A (TONEN CORP), 19. November 1993 (1993-11-19)
- PATENT ABSTRACTS OF JAPAN vol. 017, no. 458 (C-1100), 20. August 1993 (1993-08-20) -& JP 05 105731 A (SUMITOMO BAKELITE CO LTD), 27. April 1993 (1993-04-27)

## Beschreibung

Die vorliegende Erfindung betrifft eine polymere Zusammensetzung, enthaltend a) ein thermoplastisches Polymer b) eine multifunktionelle Epoxidverbindung und c) eine Imidazolidinon Verbindung. Weitere Gegenstände der Erfindung sind ein Verfahren zur Glanzverbesserung dieser Polymeren, die glanzverbesserten Polymeren selbst sowie die Verwendung von multifunktionellen Epoxidverbindung und Imidazolidinonen zur Glanzverbesserung.

Gleichmässig glänzende Oberflächen sind eine vom Anwender/Verbraucher vielfach gewünschte Eigenschaft, da diese sowohl besser Schmutz abweisen, als auch dem Produkt einen ästhetischeren Eindruck verleihen. Eine Reihe von thermoplastischen Kunststoffen, wie zum Beispiel Polyolefine, Polyvinylchlorid (PVC), welches mit alternativen Verarbeitungsstabilisatoren, wie zum Beispiel Calcium und Zink Stabilisatoren, hergestellt wurde oder Kunststoffrecyclate weisen jedoch häufig einen niedrigen Oberflächenglanz auf.

Der vorliegenden Erfindung liegt daher die Aufgabe zugrunde, glanzverbessernde Zusammensetzungen für thermoplastische Polymere, insbesondere für Polyolefine, für alternativ stabilisierte, halogenhaltige Polymere oder Kunststoffrecyclate bereitzustellen, die die thermischen- und Bewitterungseigenschaften dieser Polymeren nicht nachteilig beeinflussen.

Unter alternativer Stabilisierung halogenhaltiger Polymerer ist im Rahmen der vorliegenden Erfindung zu verstehen, dass keine Blei, Cadmium, Barium- oder Zinnstabilisatoren verwendet werden

Zur Vermeidung von Barium, Blei oder Cadmium enhaltenden Verbindungen wurden z. B. Ca/Zn-Seifen vorgeschlagen; vergleiche hierzu beispielsweise "Taschenbuch der Kunststoff-Additive". Herausgeber R. Gächter und H. Müller, (abgekürzt im folgenden als "KA'e G&M") Hanser Verlag, 3.Auflage, 1990, Seiten 308-309 und Kunststoff Handbuch PVC, Band 1 und 2, Beck/Braun, Carl Hanser Verlag, 2. Auflage, 1985/1986.

Überraschend wurde gefunden, dass diese Aufgabe durch den Zusatz von mindestens einer multifunktionellen Epoxidverbindung und mindestens einer Imidazolidinon Verbindung gelöst wird.

Gegenstand der vorliegenden Erfindung ist daher eine polymere Zusammensetzung, enthaltend
a) ein thermoplastisches Polymer,
b) mindestens eine multifunktionelle Epoxidverbindung und
c) mindestens eine Imidazolidinon Verbindung.

Die thermoplastischen Polymeren können als frisch hergestellte Polymere vorliegen oder als Recyclate. Unter Recyclaten ist im Rahmen der vorliegenden Erfindung sowohl Produktionsabfall, der wieder verarbeitet wird, als auch Polymerabfall, welcher aus Sammelgut gewonnen wird, zu verstehen.

Geeignete thermoplastische Polymere sind nachstehend aufgeführt.
1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbomen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), (VLDPE) und (ULDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, Vlb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder π- oder σ-koordiniert sein können. Diese Metallkomplexe können frei oder auf Träger fixiert sein, wie beispielsweise auf aktiviertem Magnesiumchlorid, Titan(lll)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen la, IIa und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbomen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.
4. Kohlenwasserstoffharze (z.B. C₅-C₉) inklusive hydrierte Modifikationen davon (z.B. Klebrigmacherharze) und Mischungen von Polyalkylenen und Stärke.
5. Polystyrol, Poly-(p-methylstyrol), Poly-(α-methylstyrol).
6. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-lsopren-Styrol, Styrol-Ethylen/Butylen-Styrol oder Styrol-Ethylen/Propylen-Styrol.
7. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.
8. Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomound -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-mphenylen-isophthalamid. Block-Copolymere der vorstehend genanntenPolyamide mit Polyolefinen, Olefin-Copolymeren, lonomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
17. Polyharnstoffe, Polyimide, Polyamid-imide, Polyetherimide, Polyesterimide, Polyhydantoine und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethem mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.

Eine bevorzugte Gruppe von thermoplastischer Polymeren sind halogenhaltige Polymere Dies sind bevorzugt chlorhaltige Polymere, wie beispielsweise Polymere des Vinylchlorides, Vinylharze, enthaltend Vinylchlorideinheiten in deren Struktur, Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenechlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; chlorierte Gummis; chlorierte Polymere des Ethylens; Polymere und nachchlorierte Polymere von Chlorbutadien und deren Copolymere mit Vinylchlorid, Gummi-Hydrochlorid und chloriertes Gummi-Hydrochlorid; sowie Mischungen der genannten Polymere unter sich oder mit anderen polymerisierbaren Verbindungen.
Ferner sind umfasst die Pfropfpolymerisate von PVC mit EVA, ABS und MBS. Bevorzugte Substrate sind auch Mischungen der vorstehend genannten Homo-und Copolymerisate, insbesondere Vinylchlorid-Homopolymerisate, mit anderen thermoplastischen oder/und elastomeren Polymeren, Insbesondere Blends mit ABS, MBS, NBR, SAN, EVA, CPE, MBAS, PMA, PMMA, EPDM und Polylactonen.

Weiterhin bevorzugt sind Suspensions- und Massepolymere, sowie Emulsionspolymere.

Als chlorhaltiges Polymerisat ist Polyvinylchlorid besonders bevorzugt, insbesondere Suspensionspolymerisat und Massepolymerisat.

Die chlorhaltigen Polymeren enthalten bevorzugt keinen Weichmacher.

Bevorzugt ist ein stabilisiertes halogenhaltiges Polymer, wie oben beschrieben, enthaltend mindestens eine anorganische Zinkverbindung, wie beispielsweise Zinkoxid, hydroxid, -chlorid, -sulfid oder überbasische Zinkoxid/hydroxid Additionsverbindungen, oder eine organische Zinkverbindung aus der Reihe der aliphatischen gesättigten C₂-C₂₂-Carboxylate, der aliphatischen ungesättigten C₃-C₂₂-Carboxylate, der aliphatischen C₂-C₂₂-Carboxylate, die mit wenigstens einer OH-Gruppe substituiert sind oder deren Kette wenigstens durch ein O-Atom unterbrochen ist (Oxasäuren), der cyclischen und bicyclischen Carboxylate mit 5-22 C-Atomen, der unsubstituierten, mit wenigstens einer OH-Gruppe substituierten und/oder C₁-C₁₆-alkylsubstituierten Phenylcarboxylate, der unsubstituierten, mit wenigstens einer OH-Gruppe substituierten und/oder C₁-C₁₆-alkylsubstituierten Naphthylcarboxylate, der Phenyl-C₁-C₁₆-alkylcarboxylate, der Naphthyl-C₁-C₁₆-alkylcarboxylate oder der gegebenenfalls mit C₁-C₁₂-Alkyl substituierten Phenolate.

Namentlich zu erwähnen sind, als Beispiele, die Zinksalze der monovalenten Carbonsäuren, wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Isostearinsäure, Stearinsäure, 12-Hydroxystearinsäure, 9,10-Dihydroxystearinsäure, 3,6-Dioxaheptansäure, 3,6,9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, und Sorbinsäure; Zinksalze der Monoester der divalenten Carbonsäuren, wie Oxalsäure, Malonsäure, Bernsteinsäure, Glutarsäure, Adipinsäure, Fumarsäure, Pentan-1,5-dicarbonsäure, Hexan-1,6-dicarbonsäure, Heptan-1,7-dicarbonsäure, Octan-1,8-dicarbonsäure, 3,6,9-Trioxadecan-1,10-dicarbonsäure, Polyglykol-dicarbonsäure (n=10-12), Phthalsäure, Isophthalsäure, Terephthalsäure und Hydroxyphthalsäure; und der Di- oder Triester der tri-oder tetravalenten Carbonsäuren, wie Hemimellithsäure, Trimellithsäure, Pyromellithsäure, Zitronensäure sowie Zn-Salze der 1-fach und 2-fach veresterten Phosphorsäure oder der 1-fach veresterten phosphorigen Säure, wie in JP3,275,570 beschrieben.

Bevorzugt sind insbesondere ein organisches Zinkcarboxylat einer Carbonsäure mit 7 bis 18 C-Atomen (Zinkseifen), wie beispielsweise Benzoate oder Alkanoate, bevorzugt Stearat, Oleat, Laurat, Palmitat, Behenat, Hydroxystearate, Dihydroxystearate oder (Iso)octanoat. Besonders bevorzugt sind Stearat, Oleat, Benzoat und 2-Ethylhexanoat.

Neben den genannten Zink-Verbindungen kommen auch anorganische oder organische Aluminium-Verbindungen in Frage, für welche die oben für die Zink-Verbindungen gemachten Angaben gelten. Zu den verwendbaren und bevorzugten Aluminium-Verbindungen finden sich weiter Erläuterungen in US 4,060,512.

Neben den genannten Zink-Verbindungen kommen auch anorganische oder organische Seltenerd-Verbindungen in Frage, für welche die oben für die Zink-Verbindungen gemachten Angaben gelten. Unter dem Begriff Seltenerd-Verbindung sind vor allem Verbindungen der Elemente Cer, Praseodym, Neodym, Samarium, Europium, Gadolinium, Terbium, Dysprosium, Holmium, Erbium, Thulium, Ytterbium, Lutetium, Lanthan und Yttrium zu verstehen, wobei Gemische insbesondere mit Cer bevorzugt sind. Weitere bevorzugte Seltenerd-Verbindungen finden sich in der EP-A-0108023.

Gegebenenfalls kann ein Gemisch von Zink-, Aluminium-, Lanthan- oder Lanthanoid-Verbindung unterschiedlicher Struktur eingesetzt werden. Auch können organische Zink-, Aluminium-, Lanthan- oder Lanthanoid-Verbindungen auf einen Hydrotalcit, Zeolith oder Dawsonit gecoatet sein; siehe hierzu auch DE-A-4031818.

Das erfindungsgemäss stabilisierte PVC kann weitere Additive enthalten. Es handelt sich beispielsweise um anorganische oder organische Calcium- oder Magnesium-Verbindungen, Zeolithe, Hydrotalcite, Dawsonite, Magadiite, Kenyaite, Kanemite, 1,3-Diketoverbindungen, Polyole, N-haltige Verbindungen z.B. β-Aminocrotonate wie in EP0465405, S.6 Z.9-14 erwähnt, α-Phenylindol, Pyrrole, sterisch gehinderte Amine (HALS), Dihydropyridine sowie deren Polymere, Perchlorate, Epoxide, phenolische Antioxidantien (HANDBOOK OF PVC FORMULATING E.J.Wickson John Wiley & Sons, Inc., 1993 SS.505-515), Naphthole, Thiophosphate, Weichmacher (HANDBOOK OF PVC FORMULATING E.J.Wickson John Wiley & Sons, Inc., 1993 SS.163-303), Füllstoffe (HANDBOOK OF PVC FORMULATING E.J.Wickson John Wiley & Sons, Inc., 1993 SS.393-449) und Verstärkungsmittel (TASCHENBUCH der KA'e R.Gächter & H.Müller, Carl Hanser, 1990, SS.549-615) (wie beispielsweise Calciumcarbonat, Magnesiumoxid, Magnesiumhydroxid, Silikate, Glasfasern, Talk, Kaolin, Kreide, Glimmer, Metalloxide und -hydroxide, Russ oder Graphit), Phosphite, Chelatoren (TASCHENBUCH der KA'e R.Gächter & H.Müller, Carl Hanser, 1990, SS.109-131), Lichtschutzmittel, UV-Absorber (HANDBOOK OF PVC FORMULATING E.J.Wickson John Wiley & Sons, Inc., 1993 SS.355-369), Gleitmittel (HANDBOOK OF PVC FORMULATING E.J.Wickson John Wiley & Sons, Inc., 1993 SS.369-393), Impact-Modifier (IMPACT MODIFIERS FOR PVC J.T.LUTZ & D.LDUNKELBERGER John Wiley & Sons, Inc., 1992) und Verarbeitungshilfen (TASCHENBUCH der KA'e R.Gächter & H.Müller, Carl Hanser, 1990, SS.505-524), Fettsäureester, Paraffine, Treibmittel (HANDBOOK OF PVC FORMULATING E.J.Wickson John Wiley & Sons, Inc., 1993 SS.525-551), optische Aufheller (TASCHENBUCH der KA'e R.Gächter & H.Müller, Carl Hanser, 1990, SS.807-821), Gelierhilfen, Farbstoffe (HANDBOOK OF PVC FORMULATING E.J.Wickson John Wiley & Sons, Inc., 1993 SS.449-475), Pigmente (TASCHENBUCH der KA'e R.Gächter & H.Müller, Carl Hanser, 1990, SS.663-735), Flammschutzmittel und Rauchverminderer (HANDBOOK OF PVC FORMULATING E.J.Wickson John Wiley & Sons, Inc., 1993 SS.551-579), Antistatika (HANDBOOK OF PVC FORMULATING E.J.Wickson John Wiley & Sons, Inc., 1993 SS.487-505), Antifogging agents (HANDBOOK OF PVC FORMULATING E.J.Wickson John Wiley & Sons, Inc., 1993 SS.475-487), Biocide, Thiodipropionsäure und deren Ester, Dialkyldisulfide (HANDBOOK OF PVC FORMULATING E.J.Wickson John Wiley & Sons, Inc., 1993 SS.515-525), Mercaptocarbonsäureester, peroxidzerstörende Verbindungen, Modifikatoren und weitere Komplexbildner für Lewis-Säuren.

Weitere bevorzugte thermoplastische Polymere, die von der vorliegenden Erfindung umfasst werden sind Polyolefine, wie vorstehend unter Punkt 1-3 beschrieben.

Eine Gruppe bevorzugter Polymere sind PVC, Styrol, einschliesslich seiner Co-und Pfropfcopolymeren, Polycarbonat und Blends aus Polycarbonat mit Polyestern sowie Polyphenylenoxid, sowie Polyolefine.

Besonders bevorzugt sind Zusammensetzung, welche als Komponente a) ein Polyolefin oder PVC enthalten. Ganz besonders bevorzugt sind Polypropylen oder Polyethylen.

Handelt es sich bei den thermoplastischen Polymeren um Recyclate, so sind Polyolefine wie Polyethylen und Polypropylen sowie deren Mischungen in unterschiedlichen Zusammensetzungen besonders bevorzugt. Solche Mischungen enthalten z. B. HDPE, LDPE mit PP.

Die im Rahmen der Erfindung verwendbaren Epoxidverbindungen können eine aliphatische, aromatische, cycloaliphatische, araliphatische oder heterocyclische Struktur haben; sie enthalten Epoxidgruppen als Seitengruppen. Die Epoxidgruppen sind vorzugsweise als Glycidylgruppen über Ether- oder Esterbindungen mit dem Restmolekül verbunden, oder es handelt sich um N-Glycidylderivate von heterocyclischen Aminen, Amiden oder Imiden. Epoxidverbindungen dieser Typen sind allgemein bekannt und im Handel erhältlich.

Die Epoxidverbindungen enthalten wenigstens zwei Epoxyreste, insbesondere solche der Formel II 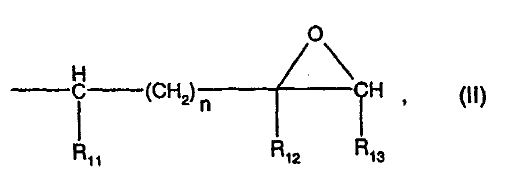 wobei diese direkt an Kohlenstoff, Sauerstoff-, Stickstoff- oder Schwefel atome gebunden ist, worin R₁₁ und R₁₃ beide Wasserstoff sind, R₁₂ Wasserstoff oder Methyl und n=0 ist, oder worin R₁₁ und R₁₃ zusammen -CH₂-CH₂- oder -CH₂-CH₂-CH₂- bedeuten, R₁₂ dann Wasserstoff und n=0 oder 1 ist.
Beispielhaft für Epoxidverbindungen sind zu erwähnen:
I) Glycidyl- und β-Methylglycidylester erhältlich durch Umsetzung einer Verbindung mit mindestens einer Carboxylgruppe im Molekül und Epichlorhydrin bzw. Glycerindichlorhydrin bzw. β-Methyl-epichlorhydrin. Die Umsetzung erfolgt zweckmässig in der Gegenwart von Basen.
   Als Verbindungen mit mindestens einer Carboxylgruppe im Molekül können aliphatische Carbonsäuren verwendet werden. Beispiele für diese Carbonsäuren sind Glutarsäure, Adipinsäure, Pimelinsäure, Korksäure, Azelainsäure, Sebazinsäure oder dimerisierte bzw. trimerisierte Linolsäure, Acryl- und Methacrylsäure, Capron-, Capryl-, Laurin-, Myristin-, Palmitin-, Stearin- und Pelargonsäure, sowie die bei den organischen Zinkverbindungen erwähnten Säuren.
   Es können aber auch cycloaliphatische Carbonsäuren eingesetzt werden, wie beispielsweise Cyclohexancarbonsäure, Tetrahydrophthalsäure, 4-Methyltetrahydrophthalsäure, Hexahydrophthalsäure oder 4-Methylhexahydrophthalsäure.
   Weiterhin können aromatische Carbonsäuren Verwendung finden, wie beispielsweise Benzoesäure, Phthalsäure, Isophthalsäure, Trimellithsäure oder Pyromellithsäure.
   Ebenfalls können auch carboxylterminierte Addukte, z.B. von Trimellithsäure und Polyolen, wie beispielsweise Glycerin oder 2,2-Bis-(4-hydroxycyclohexyl)-propan verwendet werden.
   Weitere im Rahmen dieser Erfindung verwendbare Epoxidverbindungen finden sich in der EP0506617.
II) Glycidyl- oder (β-Methylglycidyl)-ether erhältlich durch Umsetzung einer Verbindung mit mindestens einer freien alkoholischen Hydroxygruppe und/oder phenolischen Hydroxygruppe und einem geeignet substituierten Epichlorhydrin unter alkalischen Bedingungen, oder in Anwesenheit eines sauren Katalysators und anschliessender Alkalibehandlung.
   Ether dieses Typs leiten sich beispielsweise ab von acyclischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Bistrimethylolpropan, Pentaerythrit, Sorbit, sowie von Polyepichlorhydrinen, Butanol, Amylalkohol, Pentanol, sowie von monofunktionellen Alkoholen wie Isooctanol, 2-Ethylhexanol, Isodecanol sowie C₇-C₉-Alkanol- und C₉-C₁₁-Alkanolgemischen.
   Sie leiten sich aber auch beispielsweise ab von cycloaliphatischen Alkoholen wie 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenylmethan.
   Die Epoxidverbindungen können sich auch von einkernigen Phenolen ableiten, wie beispielsweise von Phenol, Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.
   Weitere mögliche endständige Epoxide sind beispielsweise: Glycidyl-1-naphthylether, Glycidyl-2-phenylphenylether, 2-Biphenylglycidylether, N-(2,3-epoxypropyl)-phthalimid und 2,3-Epoxypropyl-4-methoxyphenylether.
III) (N-Glycidyl)-Verbindungen erhältlich durch Dehydrochlorierung der Reaktionsprodukte von Epichlorhydrin mit Aminen, die mindestens ein Aminowasserstoffatom enthalten. Bei diesen Aminen handelt es sich zum Beispiel um Anilin, N-Methylanilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenol oder N,N,O-Triglycidyl-p-aminophenol.
   Zu den (N-Glycidyl)-Verbindungen zählen aber auch N,N'-Di-, N,N',N"-Tri- und N,N',N",N'''-Tetraglycidylderivate von Cycloalkylenharnstoffen, wie Ethylenharnstoff oder 1,3-Propylenharnstoff, und N,N'-Diglycidylderivate von Hydantoinen, wie von 5,5-Dimethylhydantoin oder Glykoluril und Triglycidylisocyanurat.
IV) S-Glycidyl-Verbindungen, wie beispielsweise Di-S-glycidylderivate, die sich von Dithiolen, wie beispielsweise Ethan-1,2-dithiol oder Bis-(4-mercaptomethylphenyl)-ether ableiten.
V) Epoxidverbindungen mit einem Rest der Formel II, worin R₁ und R₃ zusammen -CH₂-CH₂bedeuten und n 0 ist, sind Bis-(2,3-epoxycyclopentyl)-ether, 2,3-Epoxycyclopentylglycidylether oder 1,2-Bis-(2,3-epoxycyclopentyloxy)-ethan. Eine Epoxidverbindung mit einem Rest der Formel II, worin R₁ und R₃ zusammen -CH₂-CH₂- sind und n 1 bedeutet, ist beispielsweise 3,4-Epoxy-6-methyl-cyclohexancarbonsäure-(3',4'-epoxy-6'-methyl-cyclohexyl)-methylester.

Geeignete endständige Epoxide sind beispielsweise:
a) flüssige Bisphenol-A-diglycidylether wie Araldit®GY 240, Araldit®GY 250, Araldit®GY 260, Araldit®GY 266, Araldit®GY 2600, Araldit®MY 790;
b) feste Bisphenol-A-diglycidylether wie Araldit®GT 6071, Araldit®GT 7071, Araldit®GT 7072, Araldit®GT 6063, Araldit®GT 7203, Araldit®GT 6064, Araldit®GT 7304, Araldit®GT 7004, Araldit®GT 6084, Araldit®GT 1999, Araldit®GT 7077, Araldit®GT 6097, Araldit®GT 7097, Araldit®GT 7008, Araldit®GT 6099, Araldit®GT 6608, Araldit®GT 6609, Araldit®GT 6610;
c) flüssige Bisphenol-F-diglycidylether wie Araldit®GY 281, Araldit®PY 302, Araldit®PY 306; d)feste Polyglycidylether von Tetraphenylethan wie CG Epoxy Resin®0163;
e) feste und flüssige Polyglycidylether von Phenolformaldehyd Novolak wie EPN 1138, EPN 1139, GY 1180, PY 307;
f) feste und flüssige Polyglycidylether von o-Cresolformaldehyd Novolak wie ECN 1235, ECN 1273, ECN 1280, ECN 1299;
g) flüssige Glycidylether von Alkoholen wie Shell® Glycidylether 162, Araldit®DY 0390, Araldit®DY 0391;
h) flüssige Glycidylether von Carbonsäuren wie Shell®Cardura E Terephthalsäureester, Trimellithsäureester, Araldit®PY 284;
i) feste heterocyclische Epoxidharze (Triglycidylisocyanurat) wie Araldit® PT 810;
j) flüssige cycloaliphatische Epoxidharze wie Araldit®CY 179;
k) flüssige N,N,O-Triglycidylether von p-Aminophenol wie Araldit®MY 0510;
l) Tetraglycidyl-4-4'-methylenbenzamin oder N,N,N',N'-Tetraglycidyldiaminophenylmethan wie Araldit®MY 720, Araldit®MY 721.

Vorzugsweise finden Epoxidverbindungen mit zwei funktionellen Gruppen Verwendung. Es können aber auch prinzipiell Epoxidverbindungen mit, drei oder mehr funktionellen Gruppen eingesetzt werden.
Vorwiegend werden Diglycidylverbindungen mit aromatischen Strukturen, wie beispielsweise-Phenylresten, eingesetzt

Gegebenenfalls kann auch ein Gemisch von Epoxidverbindungen unterschiedlicher Struktur eingesetzt werden.

Besonders bevorzugt sind als multifunktionelle Epoxidverbindungen Diglycidylether auf der Basis von Bisphenolen, wie beispielsweise von 2,2-Bis-(4-hydroxyphenyl)-propan (Bisphenol A), Bis-(4-hydroxyphenyl)-methan oder Mischungen von Bis-(ortho/para-hydroxyphenyl)-methan (Bisphenol F).

Die multifuktionelle Epoxidverbindung b) wird bevorzugt in einer Menge von 0,01-10 Gew.%, bezogen auf das Polymer, eingesetzt, besonders bevorzugt in einer Menge von 0,1 -5 Gew.%.

Die Imidazolidinon Verbindungen werden bevorzugt in einer Menge von 0,01-0,5 Gew.%, bezogen auf das Polymer, eingesetzt, besonders bevorzugt in einer Menge von 0,05-0,5 Gew.%.

Bevorzugt sind solche Imidazolidinone, welche bei der Verarbeitungstemperatur wenig flüchtig sind.

Bevorzugt sind Imidazolidinonverbindungen der Formel I 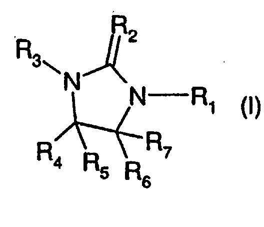 worin
R₁ und R₃ unabhängig voneinander H, C₁-C₁₈-Alkyl, unsubstituiertes oder mit C₁-C₁₂-Alkyl, C₁-C₁₂-Alkoxy oder Halogen substituiertes Phenyl oder C₇-C₉-Phenylalkyl sind;
R₂ für O oder S steht;
R₄, R₅, R₆ und R₇ unabhängig voneinander H, C₁-C₁₈-Alkyl, unsubstituiertes oder mit C₁-C₁₂-Alkyl, C₁-C₁₂-Alkoxy oder Halogen substituiertes Phenyl, C₇-C₉-Phenylalkyl, COOR₈ oder C(O)R₈ bedeutet und
R₈ H, C₁-C₁₈-Alkyl, Benzyl oder Phenyl ist.

Halogen bedeutet Fluor, Chlor, Brom oder lod.

Die C₁-C₁₈-Alkylgruppen können linear oder verzweigt sein und bedeuten z.B. Methyl, Ethyl, n-Propyl, Isopropyl, n-Butyl, tert. Butyl, Pentyl, Hexyl, Heptyl, Octyl, Decyl, Dodecyl oder Octadecyl

C₁-C₁₂-Alkoxy kann z.B. Methoxy, Ethoxy, Butoxy, Hexyloxy, Heptyloxy, Octyloxy oder Dodecyloxy sein .

C₇-C₉-Phenylalkyl bedeutet bevorzugt Benzyl.

Alkyl, Alkoxy oder Halogen substituiertes Phenyl oder Phenylalkyl können beispielsweise Tolyl, Xylyl, tert. Butylphenyl, Methoxyphenyl, Ethoxyphenyl, Chlorphenyl oder Dichlorphenyl oder die entsprechend substituierten Benzylderivate sein.

Die Verbindungen der Formel I können, abhängig von den verschiedenen Substituenten, als verschiedene Stereoisomere auftreten. Im Rahmen der vorliegenden Erfindung sind alle Stereoisomere umfasst.

Besonders bevorzugt sind Verbindungen der Formel I, worin
R₁ und R₃ unabhängig voneinander H, C₁-C₁₈-Alkyl, Phenyl oder C₇-C₉-Phenylalkyl sind;
R₂ für O oder S steht;
R₄, R₅, R₆ und R₇ unabhängig voneinander H, C₁-C₁₈-Alkyl, Phenyl, C₇-C₉-Phenylalkyl oder COOR₈ bedeutet und
R₈ H, C₁-C₄-Alkyl oder Benzyl ist.

Ganz besonders bevorzugt sind Verbindungen der Formel I, worin
R₁ und R₃ unabhängig voneinander H, C₁-C₄-Alkyl, Phenyl oder C₇-C₉-Phenylalkyl sind;
R₂ für O steht;
R₄, R₅, R₆ und R₇ unabhängig voneinander H, C₁-C₄-Alkyl, Phenyl, C₇-C₉-Phenylalkyl oder COOR₈ bedeutet und
R₈ C₁-C₄-Alkyl oder Benzyl ist.

Die Zusammensetzungen, insbesondere solche, die ein Polyolefin enthalten, können noch weitere Stabilisatoren und Additive enthalten. Beispiele sind nachstehend aufgeführt.
1. Antioxidantien
   1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Di-cyclopentyl-4-methylphenol, 2-(α-Mehhylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Di-nonyl-4-methylphenol, 2,4-Dimethyl-6-(1'-methyl-undec-1'-yl)-phenol, 2,4-Dimethyl-6-(1'-methylheptadec-1'-yl)-phenol, 2,4-Dimethyl-6-(1'-methyl-tridec-1'-yl)-phenol und Mischungen davon.
   1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
   1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,6-Di-iert-butyl-4-hydroxyphenyl-stearat, Bis(3,5-di-tert-butyl-4-hydroxyphenyl)adipat.
   1.4. Tocopherole, z.B. α-Tocopherol, β-Tocopherol, γ-Tocopherol, δ-Tocopherol und Mischungen davon (Vitamin E).
   1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec.-amylphenol), 4,4'-Bis(2,6-dimethyl-4-hydroxyphenyl)-disulfid.
   1.6. Alkyliden-Bisphenole, z.B. 2,2'-Methylen-bis(6-tert-butyl-4-methylphenol), 2,2'-Methylenbis(6-tert-butyl-4-ethylphenol), 2,2'-Methylen-bis[4-methyl-6-(α-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis(4,6-di-tert-butylphenol), 2,2'-Ethyliden-bis(6-tert-butyl-4-isobutylphenol), 2,2'-Methylen-bis[6-(α-methylbenzyl)-4-nonylphenol], 2,2'-Methylen-bis[6-(α,α-dimethylbenzyl)-4-nonylphenol], 4,4'-Methylen-bis(2,6-ditert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)-butan, 1,1 -Bis(5-tert-butyl-4-hydroxy-2-methyl-phenyl)-3-n-dodecylmercaptobutan, Ethylenglycol-bis[3,3-bis(3'-tert-butyl-4'-hydroxyphenyl)-butyrat], Bis(3-tert-butyl-4-hydroxy-5-methyl-phenyl)-dicyclopentadien, Bis[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis(3,5-di-tert-butyl-4-hydroxyphenyl)-propan, 2,2-Bis(5-tert-butyl-4-hydroxy-2-methylphenyl)-4-n-dodecylmercapto-butan, 1,1,5,5-Tetra-(5-tertbutyl-4-hydroxy-2-methylphenyl)-pentan.
   1.7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tridecyl-4-hydroxy-3,5-ditert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, Isooctyl-3,5-di-tert-butyl-4-hydroxybenzyl-mercaptoacetat.
   1.8. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzyl)-malonat.
   1.9. Hydroxybenzyl-Aromaten, z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris-(3,5-di-tert-butyl-4-hydroxybenzyl)-phenol.
   1.10. Triazinverbindungen, z.B. 2,4-Bis-octylmercapto-6-(3,5-di-tert-butyl-4-hydroxyanilino) 1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tertbutyl-4-hydroxyphenoxy)-1,2,3-triazin, 1,3,5-Tris(3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris(3,5-di-tertbutyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.
   1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.
   1.12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
   1.13. Ester der β-(3,5-Di-tert-butyl-4-hydroxyphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol 1,2-Propandiol, Neopentylglycol, Thiodiethylenglycol, Dlethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.14. Ester der β-(5-tert-Butyl-4-hydroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.15. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.16. Ester der 3.5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.17. Amide der β-(3,5-Di-tert-butyl-4-hydroxyphenyl)-propionsäure, wie z.B. N,N'-Bis(3,5-ditert-butyl-4-hydroxyphenylpropionyl)-hexamethylendiamid, N,N'-Bis(3,5-di-tert-butyl-4-hydroxyphenylpropionyl)-trimethylendiamid, N,N'-Bis(3,5-di-tert-butyl-4-hydroxyphenylpropionyl)-hydrazid, N,N'-Bis[2-(3-[3,5-di-tert-butyl-4-hydroxyphenyl]-propionyloxy)ethyl]oxamid (Naugard®XL-1 der Firma Uniroyal).
   1.18. Ascorbinsäure (Vitamin C).
   1.19. Aminische Antioxidantien, wie z.B. N,N'-Di-isopropyl-p-phenylendiamin, N,N'-Di-secbutyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(2-naphthyl)-p-phenylendiamin, N-lsopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-cyclohexyl-N'-phenyl-pphenylendiamin, 4-(p-Toluol-sulfonamido)-diphenylamin, N,N'-Dimethyl-N,N'-di-sec-butyl-pphenylendiamin, Diphenylamin, N-Allyldiphenylamin, 4-lsopropoxy-diphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylamino-phenol, 4-Dodecanoylamino-phenol, 4-Octadecanoylaminophenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sabacat, 2,2,6,6-Tetramethypiperidin-4-on, 2,2,6,6-Tetramethylpiperidin-4-ol.
2. UV-Absorber und Lichtschutzmittel
   2.1. 2-(2'-Hyrdroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tertbutyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)benzotriazol, 2-(3',5'-Bis(α,α-dimethylbenzyl)-2'-hydroxyphenyl)-benzotriazol, 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)-phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300;
      [R―CH₂CH₂―COO―CH₂CH₂⁆₂ mit R = 3'-tert-Butyl-4'-hydroxy-5'-2H-benzotriazol-2-ylphenyl; 2-[2'-Hydroxy-3'-(α,α-dimethylbenzyl)-5'-(1,1,3,3-tetramethylbutyl)-phenyl]-benzotriazol; 2-[2'-Hydroxy-3'-(1,1,3,3-tetramethylbutyl)-5'-(α,α-dimethylbenzyl)-phenyl]-benzotriazol.
   2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
   2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
   2.5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   2.6. Sterisch gehinderte Amine, wie z.B. Bis(2,2,6,6-tetramethyl-piperidin-4-yl)-sebacat, Bis-(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, lineare oder cyclische Kondensationsprodukte aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylplperidyl)-2-n-butyl-2-(2-hydroxy-3,5-di-tert-butylbenzyl)-malonat, 3-n-Octyl-7,7,9,9-tetramethyl-1,3,8-triazaspiro[4.5]-decan-2,4-dion, Bis(1-octyloxy-2,2,6,6-tetramethylpiperldyl)-sebacat, Bis(1-octyloxy-2,2,6,6-tetramethylpiperidyl)-succinat, lineare oder cyclische Kondensationsprodukte aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondensationsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro-[4,5]decan und Epichlorhydrin, 1,1-Bis(1,2,2,6,6-pentamethyl-4-piperidyloxycarbonyl)-2-(4-methoxyphenyl)-ethen, N,N'-Bis-formyl-N,N'-bls(2,2,6,6-tetramethyl-4-piperidyl)-hexamethylendiamin, Diester der 4-Methoxy-methylen-malonsäure mit 1,2,2,6,6-Pentamethyl-4-hydroxy-piperidin, Poly[methylpropyl-3-oxy-4-(2,2,6,6-tetramethyl-4-piperidyl)]-siloxan, Reaktionsprodukt aus Maleinsäureanhydrid-α-olefin-copolymer und 2,2,6,6-Tetramethyl-4-aminopiperidin oder 1,2,2,6,6-Pentamethyl-4-aminopiperidin.
   2.7. Oxalsäurediamide, wie z.B. 4,4'-Di-octyloxy-oxanilid, 2,2'-Diethoxy-oxanilid, 2,2'-Di-ootyloxy-5,5'-di-tert-butyl-oxanilid, 2,2'-Di-dodecyloxy-5,5'-di-tert-butyl-oxanilid, 2-Ethoxy-2'ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o-und p-Methoxy- sowie von o- und p-Ethoxy-di-substituierten Oxaniliden.
   2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.
3. Metalldesaktivatoren, wie z.B. N,N'-Diphenyloxalsäurediamid, N-Salicylal-N'-salicyloylhydrazin, N,N'-Bis(salicyloyl)-hydrazin, N,N'-Bis(3,5-di-tert-butyl-4-hydroxyphenylpropionyl)-hydrazin, 3-Salicyloylamino-1,2,4-triazol, Bis(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.
4. Phosphite und Phosohonite, wie z.B. Triphenylphosphit, Diphenylalkylphosphite, Phenyldialkylphosphite, Tris(nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit, 6-lsooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis(2,4-di-tertbutyl-6-methylphenyl)-methylphosphit, Bis(2,4-di-tert-butyl-6-methylphenyl)-ethylphosphit, 2,2',2"-Nitrilo[triethyl-tris(3,3',5,5'-tetra-tert-butyl-1,1'-biphenyl-2,2'-diyl)-phosphit], 2-Ethylhexyl-(3,3',5,5'-tetra-tert-butyl-1,1'-biphenyl-2,2'-diyl)-phosphit.
   Besonders bevorzugt werden die folgenden Phosphite verwendet:
   Tris(2,4-di-tert-butylphenyl)-phosphit (Irgafos®168, Ciba-Geigy), Tris(nonylphenyl)-phosphit, 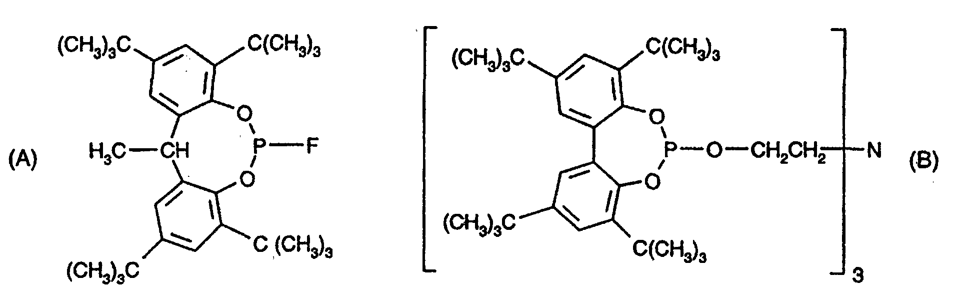 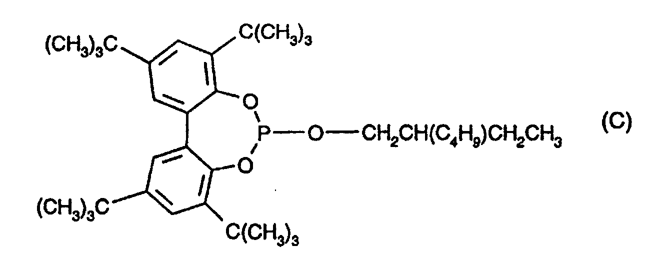 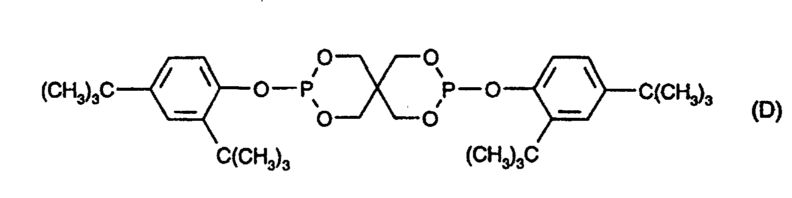 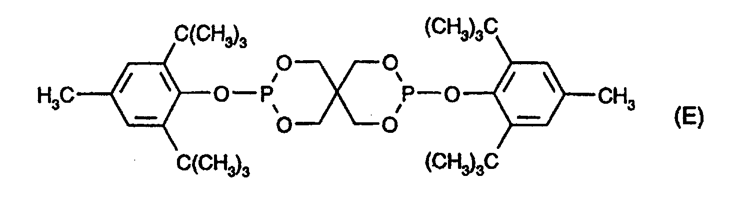 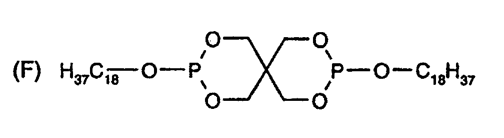 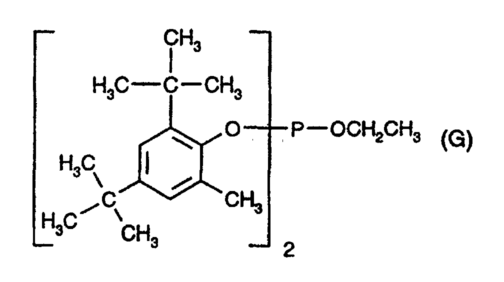
5. Hydroxylamine wie z.B. N,N-Dibenzylhydroxylamin, N,N-diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.
6. Nitrone wie z.B. N-Benzyl-alpha-phenyl-nitron, N-Ethyl-alpha-methyl-nitron, N-Octyl-alphaheptyl-nitron, N-Lauryl-alpha-undecyl-nitron, N-Tetradecyl-alpha-tridecyl-nitron, N-Hexadecyl-alpha-pentadecyl-nitron, N-Octadecyl-alpha-heptadecyl-nitron, N-Hexadecyl-alphaheptadecyl-nitron, N-Octadecyl-alpha-pentadecyl-nitron, N-Heptadecyl-alpha-heptadecyl-nitron, N-Octadecyl-alpha-hexadecyl-nitron, Nitrone abgeleitet von N,N-Dialkylhydroxylaminen hergestellt aus hydrierten Talgfettaminen.
7. Thiosynergisten wie z.B. Thiodipropionsäure-di-laurylester oder Thiodipropionsäure-distearylester.
8. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis(β-dodecylmercapto)-propionat.
9. Polyamidstabilisatoren, wie z.B. Kupfersalze in Kombination mit Jodiden und/oder Phosphorverbindungen und Salze des zweiwertigen Mangans.
10. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkaliund Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinkbrenzcatechinat.
11. Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("lonomere").
12. Füllstoffe und Verstärkungsmittel, wie z.B. Calciumcarbonat, Silikate, Glasfasern, Glaskugeln, Talk, Kaolin, Glimmer, Bariumsulfat, Metalloxide und -hydroxide, Ruß, Graphit, Holzmehl und Mehle oder Fasern anderer Naturprodukte, synthetische Fasern.
13. Sonstige Zusätze, wie z.B. Weichmacher, Gleitmittel, Emulgatoren, Pigmente, Rheologieadditive, Katalysatoren, Verlaufshilfsmittel, Optische Aufheller, Flammschutzmittel, Antistatika, Treibmittel.
14. Benzofuranone bzw. Indolinone, wie z.B. in U.S. 4,325,863; U.S. 4,338,244; U.S. 5,175,312, U.S. 5,216,052; U.S. 5,252,643; DE-A-4316611; DE-A-4316622; DE-A-4316876; EP-A-0589839 oder EP-A-0591102 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy)-phenyl]-benzofuran-2-on, 3,3'-Bis[5,7-di-tert-butyl-3-(4-[2-hydroxyethoxy]phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on, 3-(3,4-Dimethylphenyl)-5,7-di-tert-butyl-benzofuran-2-on, 3-(2,3-Dimethylphenyl)-5,7-di-tert-butyl-benzofuran-2-on.

Ein weiterer Gegenstand der vorliegenden Erfindung ist ein Verfahren zur Glanzverbesserung von thermoplastischen Polymeren, dadurch gekennzeichnet, dass man den Polymeren bei der Verarbeitung
a) mindestens eine multifunktionelle Epoxidverbindung und
b) mindestens eine Imidazolidinon Verbindung
zusetzt, das Gemisch aufschmilzt, homogenisiert und weiterverarbeitet.
Bedeutungen und Bevorzugungen für die einzelnen Komponenten sind vorstehend angegeben.

Bevorzugt beträgt die Verarbeitungstemperatur 180° C bis 280° C.

Das erfindungsgemässe thermoplastische Polymer kann auf an sich bekannte Weise hergestellt werden, wozu man unter Verwendung an sich bekannter Vorrichtungen, wie Kalander, Mischer, Kneter, Extruder und dergleichen, die genannten Stabilisatoren und gegebenenfalls weitere Zusätze mit dem thermoplastischen Polymer vermischt.

Das nach vorliegender Erfindung hergestellte thermoplastische Polymer kann danach auf bekannte Weisen in die gewünschte Form gebracht werden. Solche Verfahren sind beispielsweise, Kalandrieren, Extrudieren, Spritzgiessen, Sintern oder Spinnen, ferner Extrusions-Blasen oder Rotomoulding.

Das erfiridungsgemäs stabilisierte thermoplastische Polymer eignet sich besonders für Hohlkörper (Flaschen), Verpackungsfolien (Tiefziehfolien), Blasfolien, Rohre, Schaumstoffe, Profile (Fensterrahmen, Lichtwandprofile, Bauprofile), Sidings, Fittings, Bürofolien, Automobilteile und Apparatur-Gehäuse (Computer, Haushaltsgeräte).

Ein weiterer Gegenstand der Erfindung sind glanzverbesserte thermoplastische Polymere, enthaltend mindestens eine multifunktionelle Epoxidverbindung und mindestens eine Imidazolidinon Verbindung.

Ebenfalls Gegenstand der Erfindung ist die Verwendung einer Zusammensetzung, enthaltend mindestens eine multifunktionelle Epoxidverbindung und mindestens eine Imidazolidinon Verbindung, zur Glanzverbesserung von thermoplastischen Polymeren.

Die nachfolgenden Beispiele erläutern die Erfindung.

### Beispiele 1 und 2

Ein Polyolefin-Recyclat, bestehend aus HDPE, LDPE und PP, wird auf einem Einschneckenextruder bei einer maximalen Temperatur von 210° C mit den in der Tabelle 1 genannten Zusätzen compoundiert. Anschliessend werden Prüfkörper im Spritzgussverfahren hergestellt, an denen der Oberflächenglanz nach DIN 67530 (60° Beobachtungswinkel) gemessen wird. Die Ergebnisse sind in Tabelle 1 dargestellt.

**Tabelle 1**

| **Beispiel Nr.** | **Zusatz** | **60° Glanzwert (%)** |
|---|---|---|
| Kontrollprobe | - | 18-26 |
| 1 | 0,5% Araldit GT 7072 0,05% 2-Imidazolidinon (1) | 45 |
| 2 | 0,5% Araldit MY 790 0,05% 2-Imidazolidinon (1) | 40-55 |

### Beispiel 3

Eine PVC-Zusammensetzung wird durch Mischen der einzelnen Komponenten gemäss Tabelle 2 hergestellt. Hierzu werden die Bestandteile während 5 Minuten auf einem Mischwalzwerk bei 200° C homogenisiert und zu einem 0,3 mm dicken Film ausgewalzt.

Die Bestimmung der Langzeitstabilität erfolgt durch einen statischen Hitzetest nach DIN 53381, wobei die Probe bei 190° C in einem Umluftofen gelagert wird und die Zeit bis zur Schwärzung bestimmt wird.

Der Glanz wird mit einem Beobachtungswinkel von 60° nach Din 67530 bestimmt.

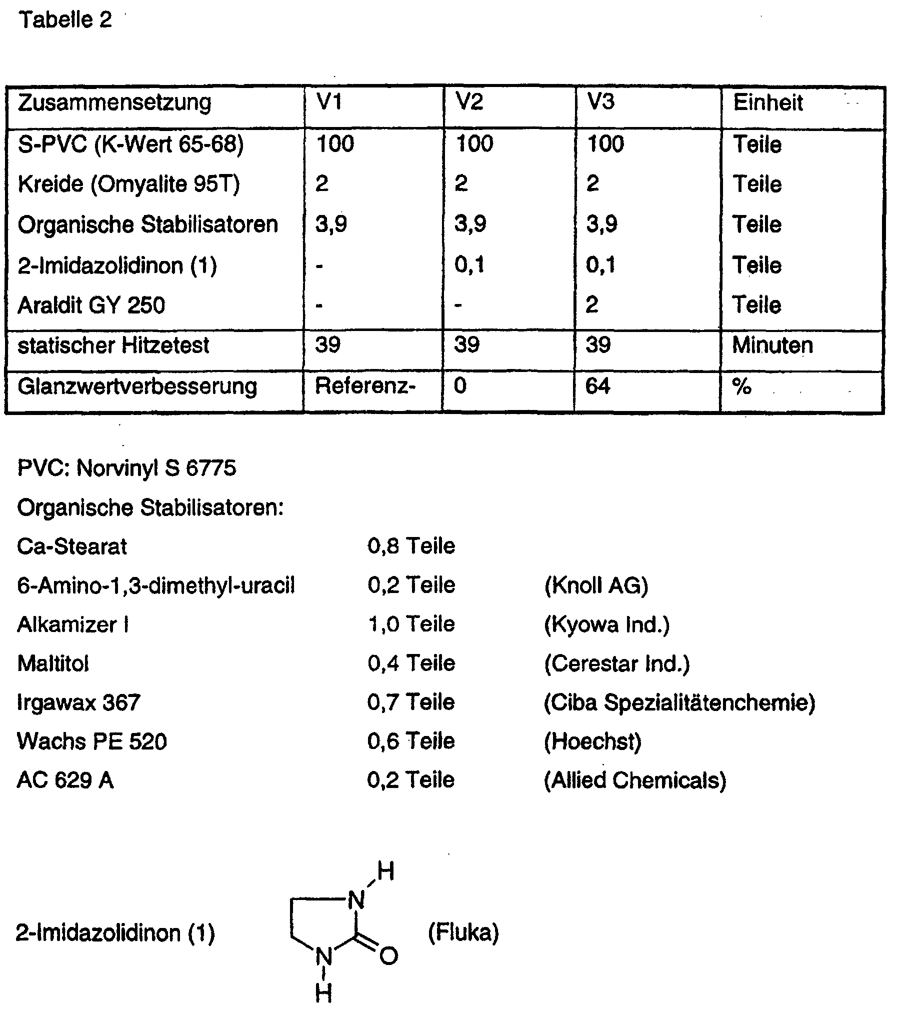

## Patentansprüche

1. Polymere Zusammensetzung, enthaltend
a) ein thermoplastisches Polymer,
b) mindestens eine multifunktionelle Epoxidverbindung und
c) mindestens eine Imidazolidinon Verbindung.

2. Zusammensetzung nach Anspruch 1, enthaltend PVC, Styrol oder eines seiner Co-und Pfropfcopolymeren, Polycarbonat und Blends aus Polycarbonat mit Polyestem sowie Polyphenylenoxid oder ein Polyolefin.

3. Zusammensetzung nach Anspruch 1, welche als Komponente a) ein Polyolefin oder PVC enthält.

4. Zusammensetzung nach Anspruch 1, welche als Komponente a) Polypropylen oder Polyethylen enthält.

5. Zusammensetzung nach Anspruch 1, enthaltend ein thermoplastisches Polymerrecyclat.

6. Zusammensetzung nach Anspruch 1, worin die multifuktionelle Epoxiverbindung b) in einer Menge von 0,01-10 Gew.%, bezogen auf das Polymer, enthalten ist.

7. Zusammensetzung nach Anspruch 1, worin das Imidazolidinon in einer Menge von 0,01-0,5 Gew.%, bezogen auf das Polymer, enthalten ist.

8. Zusammensetzung nach Anspruch 1, worin die multifunktionelle Epoxidverbindungen ausgewählt werden aus der Gruppe der Diglycidylether auf der Basis von Bisphenolen.

9. Zusammensetzung nach Anspruch 6, worin die multifunktionelle Epoxidverbindungen Diglycidylether auf der Basis von 2,2-Bis-(4-hydroxyphenyl)-propan (BisphenolA), Bis-(4-hydroxyphenyl)-methan oder Mischungen von Bis-(ortho/para-hydroxyphenyl)-methan (BisphenolF) sind.

10. Zusammensetzung nach Anspruch 1, worin die Imidazolidinonverbindung eine Verbindung der Formel I ist 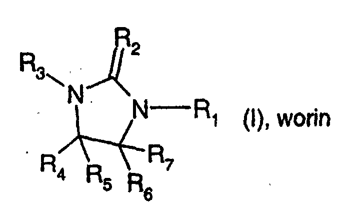
R₁ und R₃ unabhängig voneinander H, C₁-C₁₈-Alkyl, unsubstituiertes oder mit C₁-C₁₂-Alkyl, C₁-C₁₂-Alkoxy oder Halogen substituiertes Phenyl oder C₇-C₉-Phenylalkyl sind;
R₂ für O oder S steht;
R₄, R₅, R₆ und R₇ unabhängig voneinander H, C₁-C₁₈-Alkyl, unsubstituiertes oder mit C₁-C₁₂-Alkyl, C₁-C₁₂-Alkoxy oder Halogen substituiertes Phenyl, C₇-C₉-Phenylalkyl, COOR₈ oder C(O)R₈ bedeutet und
R₈ H, C₁-C₁₈-Alkyl, Benzyl oder Phenyl ist.

11. Zusammensetzung nach Anspruch 9, worin in der Formel I
R₁ und R₃ unabhängig voneinander H, C₁-C₁₈-Alkyl, Phenyl oder C₇-C₉-Phenylalkyl sind;
R₂ für O oder S steht;
R₄, R₅, R₆ und R₇ unabhängig voneinander H, C₁-C₁₈-Alkyl, Phenyl, C₇-C₉-Phenylalkyl oder COOR₈ bedeutet und
R₈ H, C₁-C₄-Alkyl oder Benzyl ist.

12. Zusammensetzung nach Anspruch 10, worin in der Formel I
R₁ und R₃ unabhängig voneinander H, C₁-C₄-Alkyl, Phenyl oder C₇-C₉-Phenylalkyl sind;
R₂ für O steht;
R₄, R₅, R₆ und R₇ unabhängig voneinander H, C₁-C₄-Alkyl, Phenyl, C₇-C₉-Phenylalkyl oder COOR₈ bedeutet und
R₈ C₁-C₄-Alkyl oder Benzyl ist.

13. Verfahren zur Glanzverbesserung von thermoplastischen Polymeren, **dadurch gekennzeichnet, dass** man den Polymeren bei der Verarbeitung
a) mindestens eine multifunktionelle Epoxidverbindung und
b) mindestens eine Imidazolidinon Verbindung
zusetzt, das Gemisch aufschmilzt, homogenisiert und weiterverarbeitet.

14. Verfahren zur Glanzverbesserung nach Anspruch 11, **dadurch gekennzeichnet, dass** die Verarbeitungstemperatur 180° C bis 280° C beträgt.

15. Glanzverbesserte thermoplastische Polymere, enthaltend mindestens eine multifunktionelle Epoxidverbindung und mindestens eine Imidazolidinon Verbindung.

16. Verwendung einer Zusammensetzung, enthaltend mindestens eine multifunktionelle Epoxidverbindung und mindestens eine Imidazolidinon Verbindung, zur Glanzverbesserung von thermoplastischen Polymeren.

## Claims

1. A polymer composition comprising
a) a thermoplastic polymer,
b) at least one polyfunctional epoxy compound and
c) at least one imidazolidone compound.

2. A composition according to claim 1, comprising PVC, styrene or one of its copolymers or graft copolymers, polycarbonate or a blend of polycarbonate with polyester as well as polyphenylene oxide or a polyolefin.

3. A composition according to claim 1 that comprises as component a) a polyolefin or PVC.

4. A composition according to claim 1 that comprises as component a) polypropylene or polyethylene.

5. A composition according to claim 1 that comprises a recycled thermoplastic polymer material.

6. A composition according to claim 1, wherein the polyfunctional epoxy compound b) is present in an amount of from 0.01 to 10 % by weight, based on the polymer.

7. A composition according to claim 1, wherein the imidazolidone is present in an amount of from 0.01 to 0.5 % by weight, based on the polymer.

8. A composition according to claim 1, wherein the polyfunctional epoxy compounds are selected from the group of the diglycidyl ethers based on bisphenols.

9. A composition according to claim 6, wherein the polyfunctional epoxy compounds are diglycidyl ethers based on 2,2-bis(4-hydroxyphenyl)-propane (bisphenol A), bis(4-hydroxyphenyl)-methane or mixtures of bis(ortho/para-hydroxyphenyl)-methane (bisphenol F).

10. A composition according to claim 1, wherein the imidazolidone compound is a compound of formula I 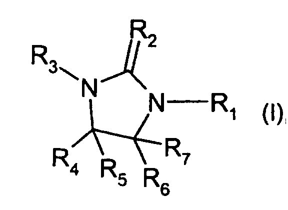 wherein
R₁ and R₃ are each independently of the other H, C₁-C₁₈alkyl, or unsubstituted or C₁-C₁₂-alkyl-, C₁-C₁₂alkoxy- or halo-substituted phenyl or C₇-C₉phenylalkyl;
R₂ is O or S;
R₄, R₅, R₆ and R₇ are each independently of the others H, C₁-C₁₈alkyl, or unsubstituted or C₁-C₁₂alkyl-, C₁-C₁₂alkoxy- or halo-substituted phenyl, C₇-C₉phenylalkyl, COOR₈ or C(O)R₈ and
R₈ is H, C₁-C₁₈alkyl, benzyl or phenyl.

11. A composition according to claim 9, wherein in formula I
R₁ and R₃ are each independently of the other H, C₁-C₁₈alkyl, phenyl or C₇-C₉phenylalkyl;
R₂ is O or S;
R₄, R₅, R₆ and R₇ are each independently of the others H, C₁-C₁₈alkyl, phenyl, C₇-C₉-phenylalkyl or COOR₈ and
R₈ is H, C₁-C₄alkyl or benzyl.

12. A composition according to claim 10, wherein in formula I
R₁ and R₃ are each independently of the other H, C₁-C₄alkyl, phenyl or C₇-C₉phenylalkyl; R₂ is O;
R₄, R₅, R₆ and R₇ are each independently of the others H, C₁-C₄alkyl, phenyl, C₇-C₉-phenylalkyl or COOR₈ and
R₈ is C₁-C₄alkyl or benzyl.

13. A method of improving the gloss of thermoplastic polymers, which comprises adding to the polymers during processing
a) at least one polyfunctional epoxy compound and
b) at least one imidazolidone compound,
and melting, homogenising and further processing the mixture.

14. A method of improving gloss according to claim 11, wherein the processing temperature is from 180°C to 280°C.

15. A thermoplastic polymer with improved gloss, comprising at least one polyfunctional epoxy compound and at least one imidazolidone compound.

16. The use of a composition comprising at least one polyfunctional epoxy compound and at least one imidazolidone compound for improving the gloss of thermoplastic polymers.

## Revendications

1. Composition polymère renfermant
a) un polymère thermoplastique,
b) au moins un composé époxyde multifonctionnel et
c) au moins un composé d'imidazolinone.

2. Composition selon la revendication 1, renfermant du PVC, du styrène et un de ses copolymères et polymères greffés, du polycarbonate et des mélanges de polycarbonate avec des polyesters ainsi que du poly(oxyphénylène) et une polyoléfine.

3. Composition selon la revendication 1, renfermant en tant que composant a) une polyoléfine. ou du PVC.

4. Composition selon la revendication 1, renfermant en tant que composant a) du polypropylène ou du polyéthylène.

5. Composition selon la revendication 1, renfermant un polymère thermoplastique recyclé.

6. Composition selon la revendication 1, présentant une teneur en composé époxyde multifonctionnel b) de 0,01 à 10 % en masse, par rapport au polymère.

7. Composition selon la revendication 1, où l'imidazolinone est contenue dans une quantité de 0,01 à 0,5 % en masse.

8. Composition selon la revendication 1, où les composés époxydes multifonctionnels sont pris dans le groupe comprenant les éthers diglycidyliques à base de bisphénols.

9. Composition selon la revendication 6, où les composés époxydes multifonctionnels sont des éthers diglycidyliques à base de 2,2-bis(4-hydroxyphényï)propane (bisphénol A), bis(4-hydroxyphényl)méthane ou des mélanges de bis-(ortho/para-hydroxyphényl)-méthane (bisphénol F).

10. Composition selon la revendication 1, où le composé d'imidazolinone est un composé de formule I 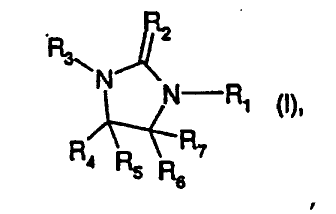 dans laquelle
R₁ et R₃ représentent indépendamment l'un de l'autre un atome d'hydrogène, un groupe alkyle en C₁-C₁₈ ou phényle non substitué ou substitué par des substituants alkyle en C₁-C₁₂, alkoxy en C₁-C₁₂ ou halogène ou phénylalkyle en C₇-C₉ ;
R₂ représente un atome d'oxygène ou de soufre ;
R₄, R₅, R₆ et R₇ représentent indépendamment les uns des autres un atome d'hydrogène, un groupe alkyle en C₁-C₁₈ ou phényle non substitué ou substitué par des substituants alkyle en C₁-C₁₂, alkoxy en C₁-C₁₂ ou halogène ou phénylalkyle en C₇-C₉, COOR₈ ou -C(O)R₈ et
R₈ représente un atome d'hydrogène, un groupe alkyle en C₁-C₁₈, benzyle ou phényle.

11. Composition selon la revendication 9, où à la formule I
R₁ et R₃ représentent indépendamment l'un de l'autre un atome d'hydrogène, un groupe alkyle en C₁-C₁₈, phényle ou phénylalkyle en C₇-C₉ ;
R₂ représente un atome d'oxygène ou de soufre ;
R₄, R₅, R₆ et R₇ représentent indépendamment les uns des autres un atome d'hydrogène, un groupe alkyle en C₁-C₁₈, phényle, phénylalkyle en C₇-C₉ ou COOR₈ et
R₈ représente un atome d'hydrogène, un groupe alkyle en C₁-C₄ ou benzyle.

12. Composition selon la revendication 10, où à la formule I
R₁ et R₃ représentent indépendamment l'un de l'autre un atome d'hydrogène, un groupe alkyle en C₁-C₄, phényle ou phénylalkyle en C₇-C₉ ;
R₂ représente un atome d'oxygène ;
R₄, R₅, R₆ et R₇ représentent indépendamment les uns des autres un atome d'hydrogène, un groupe alkyle en C₁-C₄, phényle, phénylalkyle en C₇-C₉ ou COOR₈ et
R₈ représente un groupe alkyle en C₁-C₄ ou benzyle.

13. Procédé pour améliorer la brillance de polymères thermoplastiques, **caractérisé en ce qu'**on ajoute aux polymères au cours du traitement
a) au moins un composé époxyde multifonctionnel et
b) au moins un composé d'imidazolinone,
on fond le mélange, on l'homogénéise et complète son traitement.

14. Procédé pour améliorer la brillance selon la revendication 11, **caractérisé en ce que** la température de transformation est de 180 à 280°C.

15. Polymères thermoplastiques avec la brillance améliorée, renfermant au moins un composé époxyde multifonctionnel et au moins un composé d'imidazolinone.

16. Utilisation d'une composition renfermant au moins un composé époxyde multifonctionnel et au moins un composé d'imidazolinone, pour améliorer la brillance de polymères thermoplastiques.
